# EUROPEAN PATENT APPLICATION

(11) **EP 4 741 820 A1**
(43) Date of publication of application: **13.05.2026**
(21) Application number: 24835858.2
(22) Date of filing: 11.06.2024
(51) Int. Cl.: G01N 30/86, G01N 30/46, G01N 30/50, G01N 30/88, G01N 35/00

(54) **LIQUID CHROMATOGRAPH DEVICE AND CONTROL METHOD FOR SAME**

(30) Priority: 04.07.2023 JP 2023109841
(71) Applicant: HITACHI HIGH-TECH CORPORATION, Tokyo 105-6409 (JP)
(72) Inventor: KATANO, Toshiaki, Tokyo 105-6409 (JP); SAKAMOTO, Naoto, Tokyo 105-6409 (JP)
(74) Representative: Strehl & Partner mbB
(86) International application number: PCT/JP2024/021254
(87) International publication number: WO 2025/009341

(57) **Abstract**

Provided is a liquid chromatography device capable of checking whether an analysis plan planned based on an analysis request matches an analysis process to be executed and continuing analysis even when the analysis plan does not match the analysis process. A liquid chromatography device in which a plurality of separation columns are connected to a flow path of a separation unit includes: a first storage unit configured to store an analysis process planned when an analysis is requested, an order of the analysis process, and a separation column used for the analysis; a second storage unit configured to store an analysis process planned immediately before the analysis is actually executed, an order of the analysis process, and a separation column used for the analysis; a collation unit configured to collate a content stored in the first storage unit and a content stored in the second storage unit; and a notification unit configured to notify, when the collation unit determines that the content stored in the first storage unit and the content stored in the second storage unit are different from each other, that the contents are different from each other.

## Description

### Technical Field

The present invention relates to a liquid chromatography device and a control method therefor.

### Background Art

Automatic analyzers for automatically analyzing biological samples such as blood and urine are widely used in hospitals and examination centers. In such an automatic analyzer, an analysis plan is made in the device as to which item is to be analyzed for a sample collected from a patient and in what order the analysis is to be performed in accordance with an instruction (order) of a doctor.

However, in the automatic analyzer, different biological samples are simultaneously analyzed in parallel, and an initial analysis plan and an actually performed analysis may be different due to an emergency sample being added in response to an emergency patient. In this case, an abnormal process may be erroneously performed. PTL 1 discloses a technique of collating an analysis plan created at the time of an analysis request with an actually performed analysis, verifying whether there is an abnormal process, and improving reliability of an analysis process.

### Citation List

### Patent Literature

PTL 1: JP2014-228289A

### Summary of Invention

### Technical Problem

PTL 1 does not consider a liquid chromatography device including a plurality of flow paths (streams) including a separation column. Therefore, if it is found that the analysis plan immediately before the execution does not match the analysis plan planned based on the analysis request, the analysis may be continued without being interrupted if the analysis is performed in another stream.

An object of the present invention is to provide a liquid chromatography device that verifies whether there is an abnormal process in an analysis, improves reliability of an analysis process, and reduces a risk of interrupting the analysis.

### Solution to Problem

A configuration of the invention for achieving the above object is as follows.

A liquid chromatography device in which a plurality of separation columns are connected to a flow path of a separation unit, the liquid chromatography device includes: a first storage unit configured to store an analysis process planned when an analysis is requested, an order of the analysis process, and a separation column used for the analysis; a second storage unit configured to store an analysis process planned immediately before the analysis is actually executed, an order of the analysis process, and a separation column used for the analysis; a collation unit configured to collate a content stored in the first storage unit and a content stored in the second storage unit; and a notification unit configured to notify, when the collation unit determines that the content stored in the first storage unit and the content stored in the second storage unit are different from each other, that the contents are different from each other.

In addition, a feature of the invention is that the analysis plan is checked before the analysis is actually performed, and if there is a problem, whether the analysis based on the analysis plan can be corrected can be examined. The technique described in PTL 1 is significantly different from the invention in that verification is performed after analysis.

### Advantageous Effects of Invention

According to the invention, it is possible to provide a liquid chromatography device that verifies whether there is an abnormal process in an analysis, improves reliability of an analysis process, and reduces a risk of interrupting the analysis.

### Brief Description of Drawings

[FIG. 1] FIG. 1 is a diagram showing an overall schematic configuration of a liquid chromatograph mass spectrometer.
[FIG. 2] FIG. 2 is a diagram showing an example of a device state confirmation screen for the liquid chromatograph mass spectrometer.
[FIG. 3] FIG. 3 is a diagram showing an example of a specimen processing confirmation screen in a preprocessing step and an analysis step executed by the liquid chromatograph mass spectrometer.
[FIG. 4] FIG. 4 is a diagram showing an example of a specimen processing confirmation screen for a separation column.
[FIG. 5] FIG. 5 is a diagram showing an example of a mask setting screen for a separation column.
[FIG. 6] FIG. 6 shows a typical separation process scheme in the liquid chromatograph mass spectrometer.
[FIG. 7] FIG. 7 shows a separation process scheme when a solvent ratio is different from that in an immediately preceding measurement.
[FIG. 8] FIG. 8 shows a separation process scheme when salt may be precipitated by the immediately preceding measurement.
[FIG. 9] FIG. 9 shows a flow of verification and checking according to Example 1.
[FIG. 10] FIG. 10 shows a flow of verification and checking according to Example 2.
[FIG. 11] FIG. 11 is a diagram showing an example of an analysis plan schedule planned when an analysis is requested.

### Description of Embodiments

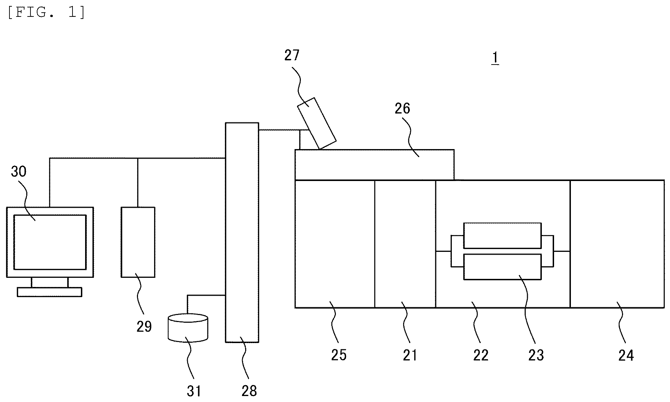

Hereinafter, a liquid chromatography device and a control method therefor will be described with reference to FIGS. 1 to 6. In the drawings used in the present specification, the same or corresponding components are denoted by the same or similar reference signs, and repeated descriptions of these components may be omitted.

Hereinafter, a liquid chromatograph mass spectrometer in which a liquid chromatography device is combined with a mass spectrometer will be described with reference to FIG. 1. FIG. 1 is a diagram showing an overall schematic configuration of a liquid chromatograph mass spectrometer.

As shown in FIG. 1, a liquid chromatograph mass spectrometer 1 includes processing units of a preparation unit 21, a separation unit 22 including a plurality of separation columns 23 for performing a separation process, and an analysis unit 24, a sample rack supply unit 25 for loading a sample rack on which one or more sample containers containing samples to be processed (analyzed) by these processing units are mounted, a conveyance line 26, an ID reading unit 27, an overall management computer 28, and the like.

The sample rack supply unit 25 is a unit that supplies a sample rack holding a plurality of sample containers.

The sample container held by the sample rack is provided with a label, a barcode, or the like on which a sample ID indicating attribute information (a reception number, a patient name, a requested analysis item, and the like) regarding a blood sample is recorded. A tag indicating a rack ID indicating rack identification information such as a rack number is attached to the sample rack itself.

The sample rack placed in the sample rack supply unit 25 is conveyed by the conveyance line 26. At this time, information related to the sample ID and the sample rack ID is read by the ID reading unit 27, and sent to the overall management computer 28.

The conveyance line 26 conveys the sample rack supplied from the sample rack supply unit 25 to the preparation unit 21 in the target liquid chromatograph mass spectrometer 1 according to an analysis request made by a user such as a laboratory technician or a doctor.

The preparation unit 21 starts sample processing on the conveyed sample according to the analysis request. The sample is dispensed, unnecessary substances in the taken-out sample are removed through stirring, magnetic bead processing, or the like, dilution is performed according to the item, and the processed sample is conveyed to the separation unit 22.

At the time of sample dispensing, a schedule for an order and content of a subsequent analysis of the sample processed in the preparation unit 21 is planned. A subsequent process is a process performed based on the planned schedule.

The sample conveyed to the separation unit 22 is sent to each of the plurality of separation columns 23 existing in the separation unit 22 corresponding to analysis items via a pump. The sample is passed through the separation column 23 along with a flow of a mobile phase, and components are separated using a difference in passing speeds of the components. The separation column 23 to which the sample is distributed is determined by a schedule determined at the time of dispensing.

When the sample and the mobile phase flow from the separation unit 22 to an ion source of the analysis unit 24 via the pump, the sample is ionized using an ionization method. At this time, only ions having a specific mass-to-charge ratio are selected and measured using a detector. An analysis result to be displayed to the user is calculated using a result measured by the detector.

Here, details of the separation column 23 of the separation unit 22 will be described below. The separation column 23 is a consumable item for which the number of uses and an expiration date are determined, and when at least one of the number of uses and the expiration date exceeds a usable range, the separation column 23 is determined to be unusable (hereinafter, referred to as a mask).

As described above, since the expiration date and the number of usable times of the separation column 23 are determined, even when the multi-stream type liquid chromatograph mass spectrometer 1 as in the present embodiment is used, if it is necessary to replace the plurality of separation columns 23 at the same or similar timing, the analysis of the sample may not be continued and the device may be stopped.

Therefore, it is necessary to present an element for determining a replacement timing of the separation column 23 of the multi-stream type liquid chromatograph mass spectrometer 1 to the user to prompt replacement.

In addition, when the separation column 23 whose expiration date is not expired is replaced without stopping an analysis operation, it is necessary to specify a sample scheduled to be subjected to the separation process or a sample subjected to the separation process in the separation column 23 and present the sample to the user.

The overall management computer 28 is a computer including a CPU, a memory, and the like, and performs control necessary for analysis work in each device in the liquid chromatograph mass spectrometer 1 such as the sample rack supply unit 25, the conveyance line 26, the ID reading unit 27, the preparation unit 21, the separation unit 22, and the analysis unit 24.

For example, the overall management computer 28 determines an analysis schedule from the requested analysis items based on the attribute information read by the ID reading unit 27 and a device status.

The overall management computer 28 performs display control of a display screen of the display device 30 on which various types of information such as information related to a sample, information related to analysis items, and information related to an analysis result are displayed. Further, control is executed to display various screens related to operations of the liquid chromatograph mass spectrometer 1, such as an operation screen for starting an analysis, an analysis progress status, a screen for instructing the use of the separation column 23 corresponding to the analysis item when the analysis work is performed, and information related to a use status of the separation column 23. The overall management computer 28 corresponds to a control unit.

In particular, the overall management computer 28 determines whether an error occurs in each of the separation columns 23 as display control for managing sample processing information in the device at the time of analysis execution on these various screens (determination step), causes the display unit to display a workflow related to the separation unit 22, and specifies and displays the separation column 23 determined to have the error and a sample related to the separation column 23 (display step). At this time, a processing status of the specified sample can be displayed.

Here, a type of the error includes, for example, an occurrence of an abnormality in the separation column 23 and an error of a warning that the expiration date of the separation column 23 is about to exceed.

For example, when the error is the occurrence of the abnormality in the separation column 23, the overall management computer 28 specifies and displays the separation column 23 in which the abnormality occurs, and specifies and displays a sample currently using the separation column 23 and a sample scheduled to use the separation column 23 as related samples.

In addition, if the error is a warning that the expiration date of the separation column 23 is about to exceed, when the separation column 23 corresponding to the error is replaced at the time of performing the analysis work, the separation column 23 to be replaced, the sample currently using the separation column 23 and the sample scheduled to use the separation column 23 are specified and displayed as the related samples. Details of these control and display will be described later.

An operation unit 29 including a keyboard and a mouse for inputting data, a display device 30 for displaying data, a storage device 31 for storing analysis instruction information and measurement results, and the like are further connected to the overall management computer 28.

The display device 30 is a display device such as a liquid crystal display that displays information related to the processing status in the device including the analysis result, the analysis progress status, and the use status of the separation column 23. The display device 30 may be a touch panel type, and also serves as the operation unit 29 in this case.

The storage device 31 is a recording medium such as a semiconductor memory such as a flash memory or a magnetic disk such as an HDD in which data related to a sample loaded into the liquid chromatograph mass spectrometer 1 and an analysis result are recorded. The storage device 31 also records various computer programs and the like for controlling the operation of the devices in the liquid chromatograph mass spectrometer 1 and executing various display processes described later.

The above is the configuration of the liquid chromatograph mass spectrometer 1. The analysis process of the sample by the liquid chromatograph mass spectrometer 1 as described above is generally executed in the following order.

An operator uses the display device 30 and the operation unit 29 to give an analysis instruction to the liquid chromatograph mass spectrometer 1. The analysis instruction is stored in the storage device 31 and transmitted to the modules (the preparation unit 21, the separation unit 22, and the analysis unit 24) via the overall management computer 28. The target module performs an analysis operation according to the received instruction.

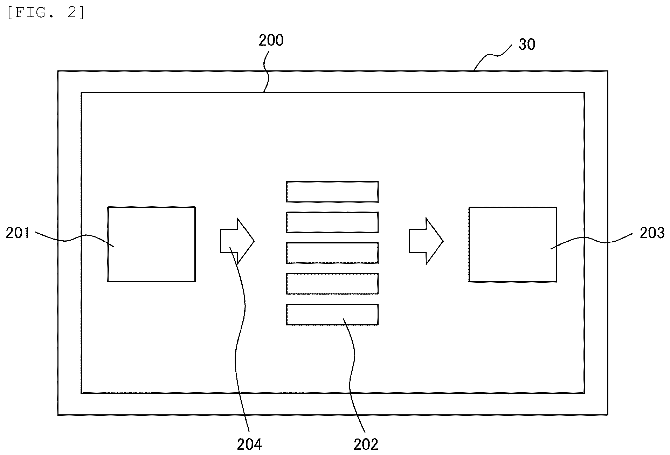

Next, a device state confirmation display at the time of performing an analysis in the liquid chromatograph mass spectrometer 1 will be described with reference to FIG. 2. First, a display flow of a device state confirmation screen 200 will be described. The control of the liquid chromatograph mass spectrometer 1 is performed by the overall management computer 28, and the device state confirmation screen 200 shown in FIG. 2 is displayed on the display device 30.

The operator uses the display device 30 and the operation unit 29 to give an instruction to the liquid chromatograph mass spectrometer 1 to activate the device state confirmation screen 200. The overall management computer 28 starts automatic confirmation of the device state based on the activate instruction.

At this time, information related to a processing status of the preparation unit 21 of the device, the processing status and the number of uses of each separation column 23 of the separation unit 22, a processing status of the analysis unit 24, and a schedule of an estimated time at which the analysis ends is obtained as contents of the device state automatic confirmation.

Further, information related to whether an abnormality occurs in the preparation unit 21, the separation columns 23 of the separation unit 22, and the analysis unit 24 is obtained. This process corresponds to a determination step of determining whether an error occurs in each of the separation columns 23.

Next, the overall management computer 28 determines a color for stepwise displaying the device state and the like for displaying the device state confirmation screen 200 shown in FIG. 2 on the display device 30, and issues a coloring instruction according to the processing status.

When a colored portion is determined, the overall management computer 28 causes the display device 30 to update a screen of a device processing state and display the device state confirmation screen 200 in FIG. 2. The device state confirmation screen 200 in FIG. 2 will be described below.

The device state confirmation screen 200 shown in FIG. 2 is a screen for a purpose of displaying an operation status and state of the liquid chromatograph mass spectrometer 1 and for specifying a location of an abnormality when the abnormality occurs. In the present embodiment, seven buttons in three types are provided, and the device state is represented by a coloring status of the button. Further, a process transition display 204 indicates an order of analysis steps.

On the device state confirmation screen 200 shown in FIG. 2, buttons representing device states including a preparation unit button 201, a plurality of separation column buttons 202, and an analysis unit button 203 are colored and displayed by the following coloring example. The display can be as follows.

When the step or the separation column 23 is normally performed, the number of usable times of the separation column 23 until the separation column 23 cannot be used is larger than a recommended replacement number determined for the separation column 23, and the expiration date is also before a recommended replacement period, the separation column 23 is colored in green.

When the number of uses of the separation column 23 is within a range of the recommended replacement number determined for the separation column 23, and/or when the expiration date is within the determined recommended replacement period, the separation column 23 is colored in yellow.

When the number of uses determined for the separation column 23 is expired and the expiration date exceeds, the separation column 23 is colored in red. When the step or the separation column 23 are not in processing, coloring is not performed. A state in which the operation is stopped due to a sudden abnormality of the device such as detection of clogging of the steps or the separation column 23, the separation column 23 is colored in orange. When the separation column 23 is not registered in the device, the separation column 23 is colored in black. In addition, the overall management computer 28 updates the screen based on information related to a start and end of processing in each step and each separation column 23.

By pressing each button of the preparation unit button 201, the separation column buttons 202, and the analysis unit button 203 in the device state confirmation screen 200 of FIG. 2, screen transition can be performed.

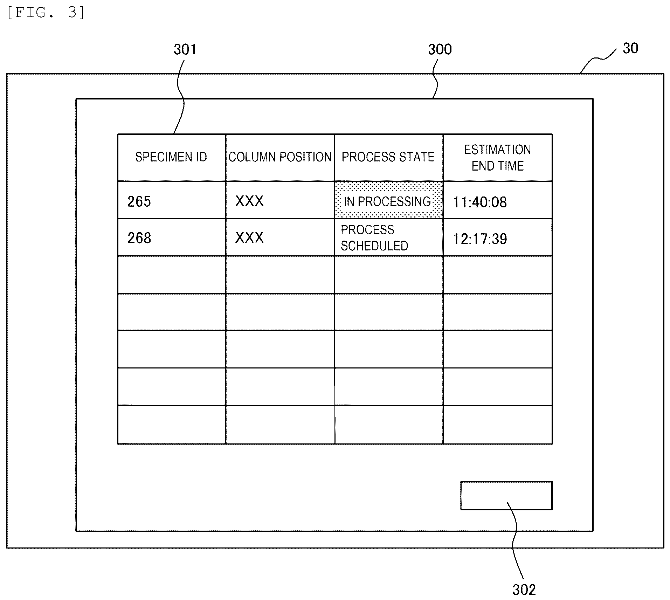

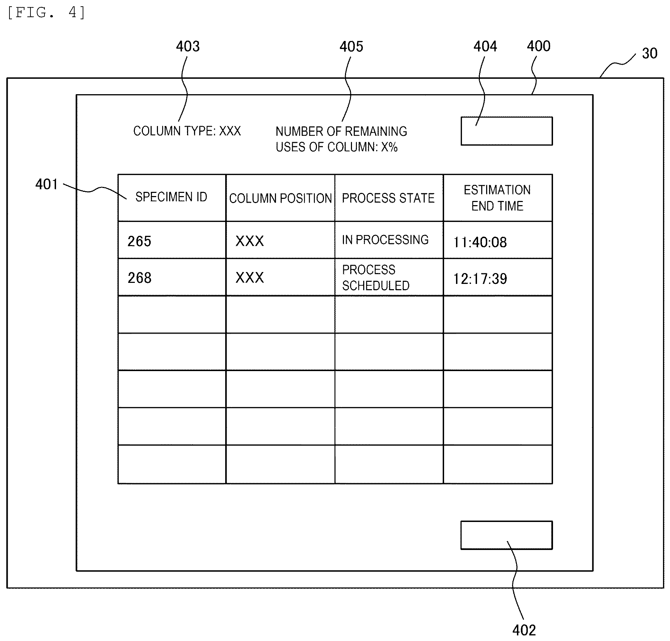

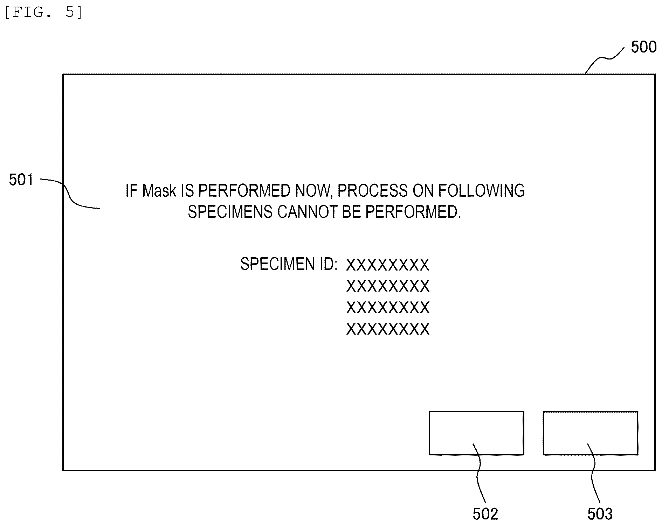

Hereinafter, a screen displayed by the screen transition and display contents of the screen will be described with reference to FIGS. 3 to 5. FIG. 3 is a diagram showing an example of a sample processing confirmation screen in a preparation step and the analysis step, FIG. 4 is a diagram showing an example of a sample processing confirmation screen for a separation column, and FIG. 5 is a diagram showing an example of a mask setting screen for a separation column.

When the preparation unit button 201 is pressed from FIG. 2, the overall management computer 28 displays a sample processing status confirmation screen 300 (FIG. 3) related to the preparation unit 21. The sample processing status confirmation screen 300, a sample processing status confirmation screen 400 to be described later, and a mask setting confirmation screen 500 (FIG. 5) may be displayed by transitioning from the device state confirmation screen 200 for each screen, or may be displayed by popping up on the device state confirmation screen 200, and is not particularly limited.

When the separation column button 202 is pressed from FIG. 2, the overall management computer 28 displays the sample processing status confirmation screen 400 (FIG. 4) related to the separation column 23.

In addition, since there are a plurality of separation columns 23 and there are a plurality of separation column buttons 202 as many as the corresponding number, the sample processing status confirmation screen 400 is also a display related to the separation column 23 to be pressed, and the display content differs depending on each separation column button 202.

When the analysis unit button 203 is pressed from FIG. 2, the overall management computer 28 displays a sample processing status confirmation screen 300 as shown in FIG. 3 regarding the analysis unit 24.

The sample processing status confirmation screen 300 of FIG. 3 and the sample processing status confirmation screen 400 of FIG. 4 show the sample processing status corresponding to the button of the step or the separation column 23 pressed on the device state confirmation screen 200 of FIG. 2. This process corresponds to a display step of displaying a workflow related to the separation unit 22 on the display unit.

On the sample processing status confirmation screen 300 in FIG. 3 or the sample processing status confirmation screen 400 in FIG. 4, the operator gives an instruction to display the sample processing status of the step to the liquid chromatograph mass spectrometer 1 using the display device 30 and the operation unit 29.

The overall management computer 28 starts confirming the schedule of the sample processing based on the start instruction.

Next, the overall management computer 28 automatically confirms the device status. The overall management computer 28 determines colors for stepwise displaying the status related to the device status or the like on the sample processing status confirmation screen 300 in FIG. 3 or the sample processing status confirmation screen 400 in FIG. 4 on the display device 30.

Then, the overall management computer 28 causes the display device 30 to update the screen of the device processing state, and displays the sample processing status confirmation screen 300 in FIG. 3 and the sample processing status confirmation screen 400 in FIG. 4.

Hereinafter, the display contents of the sample processing status confirmation screens 300, 400 shown in FIGS. 3 and 4 will be described. Although the sample processing status confirmation screen 400 shown in FIG. 4 is used in the following description, the content of the sample processing status confirmation screen 300 is the same.

The sample processing status confirmation screen 400 is intended to confirm information such as a step corresponding to the pressed button in the device state confirmation screen 200 in FIG. 2, information related to the sample processing status in the separation column 23, and which separation column 23 is to be used in the separation step.

The sample processing status confirmation screen 400 in FIG. 4 is additionally intended to provide the user with information for determining a replacement period of the separation column 23 and information on a type of each separation column 23.

The sample processing status confirmation screen 400 in FIG. 4 displays sample processing information 401 (sample processing information 301 in FIG. 3). In the present example, "sample ID" is displayed as the display contents, "column position" is displayed as a connection position of the separation column 23, "process state" is displayed as the processing status of the sample, and "estimation end time" of the analysis process is displayed as a schedule determined by the device at the start of the processing.

The "sample ID" is a sample related to the separation column 23 to be displayed, and the ID of the sample currently using the separation column 23 and the sample scheduled to use the separation column 23 is displayed.

A display method of the "process state" is as follows. When the target sample is processed in the preparation step, the analysis step, or the separation column 23, "in processing" is displayed. In a state in which the target sample is processed in the previous step or the separation column 23, a step corresponding to the currently displayed screen or a sample to be processed in the separation column 23 is displayed as "process scheduled".

Further, the state display according to the device status can be performed by coloring. Regarding the colored display, the colored display and the coloring of the state for each button in FIG. 2 can be the same.

A close button 402 (close button 302 in FIG. 3) is a button for closing the screen of the sample processing status confirmation screen 400 in FIG. 4 and returning to the device state confirmation screen 200 in FIG. 2.

A column type 403 is a region displayed only on the sample processing status confirmation screen 400 in FIG. 4, and is used when the type of the separation column 23 is confirmed.

The column type 403 is intended to provide the user with information during the replacement of the separation column 23 or the like for each type. Accordingly, the user can use the information for confirmation during the replacement with the same type of separation column 23.

A mask button 404 is a button displayed only on the sample processing status confirmation screen 400 in FIG. 4, and is used to display the mask setting confirmation screen 500 in FIG. 5 for the corresponding separation column 23.

When the mask setting is performed by operating the mask setting confirmation screen 500 displayed at the time of pressing the mask button 404, the separation column 23 can be brought into a detachable state.

In general, when the separation column 23 beyond a predetermined number of effective uses or the expiration date is to be used, the mask setting is performed to automatically stop the use. On the other hand, the mask button 404 is used to make the separation column 23 detachable when it is desired to replace the separation column 23 before the mask setting is automatically performed, and is used when the mask setting is manually performed.

When an abnormality occurs in the separation column 23, the colored display indicating that the operation is stopped is performed on the device state confirmation screen 200 shown in FIG. 2, but in the sample processing information 401 of the sample processing status confirmation screen 400 displayed when the separation column 23 of the display in which the operation is stopped is selected on the device state confirmation screen 200, display indicating "abnormality occurrence" is performed in the "process state", and the time is not displayed in the "estimation end time". In this case, it is possible to specify the sample currently using the separation column 23 and the sample scheduled to use the separation column 23 as the related samples by the "sample ID".

Also in this case, the mask setting confirmation screen 500 as shown in FIG. 5 can be displayed in order to reliably notify the affected sample that is already masked.

The number of remaining uses of column 405 is a region displayed only on the sample processing status confirmation screen 400 in FIG. 4, and is used to confirm the remaining number of uses of the separation column 23.

The number of remaining uses of column 405 is calculated based on the number of effective uses determined for the separation column 23 and the number of uses of the separation column 23. Accordingly, the user can be provided with the information for determining the replacement period of the separation column 23. In the present embodiment, a unit of the number of times is displayed in percentage, but the remaining number of effective uses itself can also be displayed.

The number of remaining uses of column 405 of the sample processing status confirmation screen 400 in FIG. 4 makes it possible to prompt the user to replace the separation column 23 before the separation column 23 is in the masked state and perform to replace.

On the sample processing status confirmation screen 300 in FIG. 3 or the sample processing status confirmation screen 400 in FIG. 4, the user can be notified of the process state or scheduled status of the sample in each step or each separation column 23 for each sample ID by the sample processing information 401 (sample processing information 301 in FIG. 3).

The sample processing status confirmation screen 400 in FIG. 4 is a display that enables confirmation of the flow of the sample processing, confirmation of the separation column 23 to be used, the device state, the estimation end time of the sample processing, and the like, not only when an abnormality occurs, and can be confirmed when analysis is being performed.

Similarly, the sample processing status confirmation screen 300 in FIG. 3 is a display that enables confirmation of the flow of the sample processing, the device state, the estimation end time of the sample processing, and the like in addition to the abnormality occurrence, and can be confirmed at the time of performing the analysis for the preparation unit 21 and the analysis unit 24.

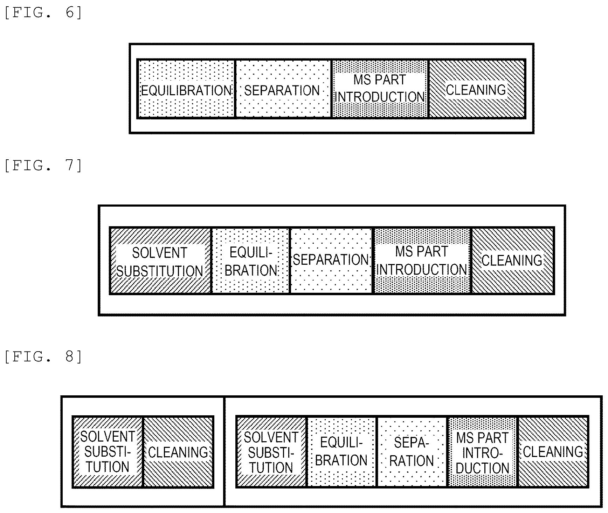

FIG. 6 shows a separation process scheme in the liquid chromatograph mass spectrometer. A typical separation process includes four major steps: an equilibration step of causing a solvent to flow such that the solvent spreads throughout the separation column; a separation step of injecting the sample into the separation column in which the equilibration is completed; an MS part introduction step of introducing the sample separated in an elution time into the mass spectrometer; and a cleaning step of cleaning an inside of the MS part.

FIG. 7 shows a separation processing step when a solvent ratio (for example, a ratio of water and acetonitrile in the case of performing gradient elution in a reverse phase mode, changing the composition of water/acetonitrile from 90/10 to 50/50) is different from that in an immediately preceding measurement. A solvent replacement step is required before equilibration.

In addition, in the case of a solvent combination in which a salt may be precipitated due to an influence of the immediately preceding measurement, as shown in FIG. 8, a step of performing column cleaning after solvent replacement and further performing equilibration after solvent replacement may be required.

As described above, since a preparation operation required for the measurement differs depending on measurement conditions in the immediately preceding measurement and the next measurement, an analysis plan of the order in which the analysis is performed is important.

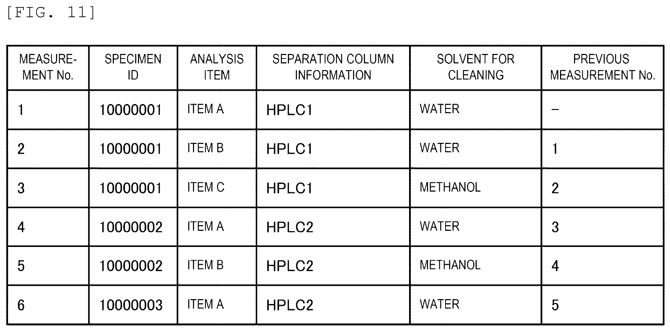

FIG. 11 shows an example of the analysis process planned at the time of an analysis request, an order thereof, and information on the separation column used for the analysis. Based on this information, the liquid chromatograph mass spectrometer performs scheduling such as solvent replacement, equilibration treatment, and cleaning.

After the scheduling, the planned analysis process, the order thereof, and the separation column used for the analysis may be changed when the analysis is requested by an input of an emergency sample or the like. Therefore, the latest analysis plan is confirmed before the analysis is started (preferably just before).

### [Example 1]

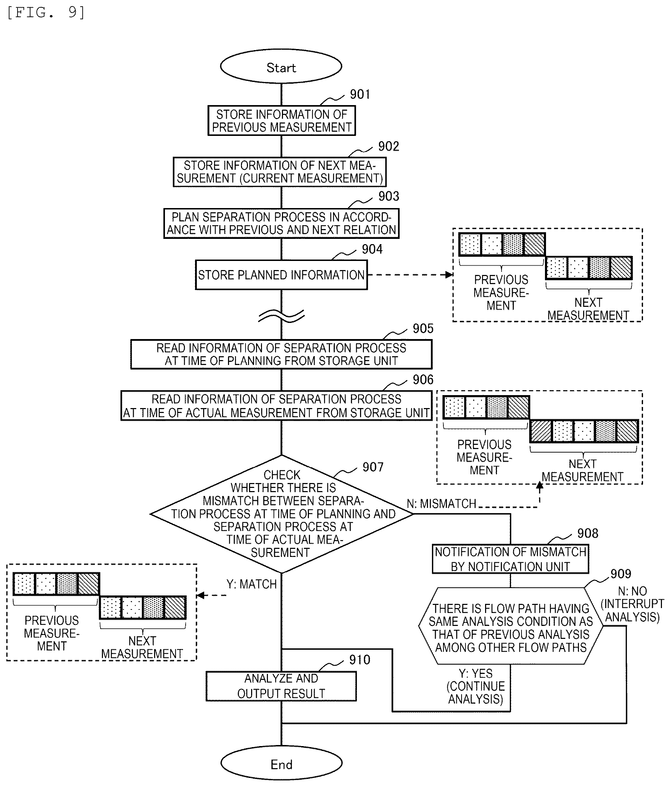

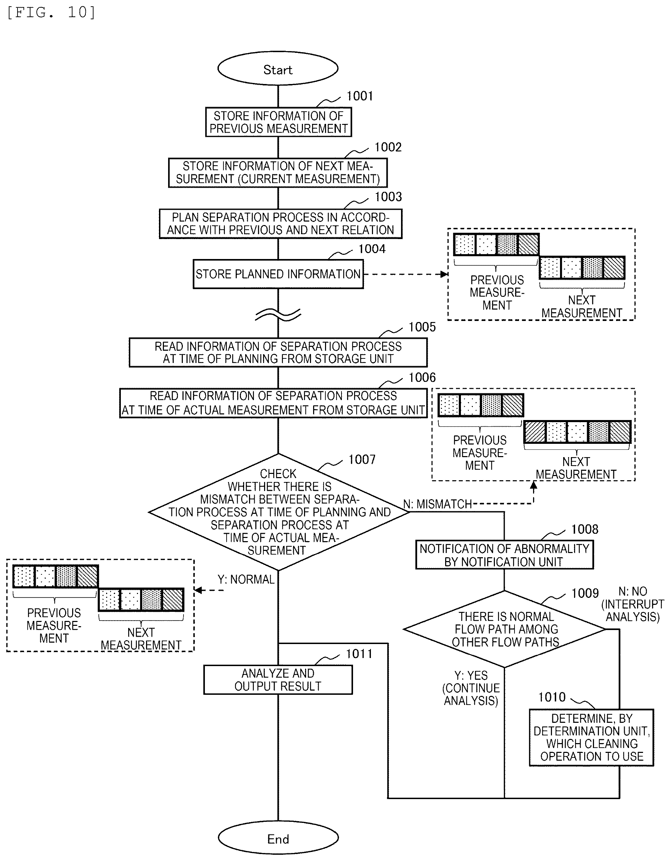

FIG. 9 shows a confirmation flow of the analysis plan. First, at the time of receiving an analysis request, the analysis process of the previous measurement, the order thereof, and the information on the separation column used for the analysis are stored (S901). In the flowchart, S, which means "step", is omitted and is represented only by a number. The same applies to FIG. 10.

Next, the analysis process of the next measurement, the order thereof, and information on the separation column used for analysis are stored (S902). The separation process is planned in accordance with a relationship between previous and subsequent analyses (S903). The planned information is stored (S904). The information stored in S904 is stored in a first storage unit provided in a part of a storage area of the storage device 31 in FIG. 1. Hereinafter, although it is called the "first storage unit" and a "second storage unit", it does not need to be a storage device additionally provided as hardware. For example, when a storage area of one hard disk storage device is divided into a "first storage area" and a "second storage area" by software, this also corresponds to the "first storage unit" and the "second storage unit" as referred to in the claims.

For example, the example indicated by a right dotted line arrow is an example in which it is planned that the solvent replacement and cleaning after the solvent replacement are unnecessary since the separation process using the same solvent is continuous.

Thereafter, at the timing when actual measurement is to be performed on the sample, the information on the separation process at the time of planning is read from the storage unit before the measurement (S905), and the information stored as the separation process at the present time is read (S906). In the reading of the information in S906, the information stored in the second storage unit provided in a part of the storage area of the storage device 31 in FIG. 1 is read.

The notation in FIG. 9 is "information of separation process at time of actual measurement", which means "immediately before actual measurement is performed". In FIGS. 9 and 10, since a space is small, such notation is used. That is, S907 in FIG. 9 and S1006 and S1007 in FIG. 10 are the same.

Next, it is checked whether there is a mismatch between the plan analysis processing and the analysis process immediately before the measurement (S907). The check is performed by the software program of the overall management computer 28 in FIG. 1. Although it is referred to as a "collation unit" in the claims, there is no dedicated hardware called a collation unit in the present example, and a part of the software program of the overall management computer 28 is referred to as a "collation unit". Of course, dedicated hardware called a collation unit may be provided.

When the separation process at the time of planning and the separation process at the time of actual measurement do not match (N: mismatch), the notification unit notifies the mismatch (S908), and searches for another separation column (stream) that can perform analysis under the same analysis condition as the separation process at the time of planning (S909). In the present example, the display device 30 is used as the notification unit. When the collation unit determines that there is a mismatch, the mismatch is displayed on the display screen of the display device 30 to notify the operator. As a notification method, an alarm sound may be emitted from a speaker attached to the display device in order to attract the attention of the operator.

When there is a stream that can perform analysis, the analysis plan is changed so that the analysis is performed in the stream, and the analysis is continued (Y: Yes). When there is no stream that can perform analysis, the analysis is interrupted (N: No). Analysis is performed through such a process, and an analysis result is output (S910).

### [Example 2]

Hereinafter, another embodiment will be described with reference to FIG. 10. Since steps S1001 to S1009 are the same as those in FIG. 9, the description thereof will be omitted.

When there is no separation column having the same analysis condition in other streams in S1009, the determination unit determines which cleaning operation to use to clean the analysis column or the like (S1010). After executing the cleaning operation determined by the determination unit, the analysis and the result are output (S1011).

In this embodiment, compared to Example 1, the analysis cannot be started before the cleaning operation is completed, and thus additional time is spent until the analysis result is output, but this is faster than interrupting the analysis. It is useful to select the embodiment of Example 2 if it is a sample that has no problems even if it takes time.

It is preferable to have a setting function that allows the user to set in advance whether to interrupt the analysis of the sample as in Example 1, or to continue the analysis of the sample even after performing the cleaning operation as described in Example 2.

In this case, it may be possible to set whether to collectively apply Example 1 or Example 2 to all samples, or to automatically change the applied mode according to the type of sample, such as applying Example 2 to an emergency sample but applying Example 1 to a general sample.

### <Others>

The invention is not limited to the embodiments described above, and various modifications and applications are possible. The embodiments described above are described in detail for easy understanding of the invention, and the invention is not necessarily limited to those having all the configurations described above.

### Reference Signs List

- 1:: liquid chromatograph mass spectrometer
- 21:: preprocessing unit
- 22:: separation unit
- 23:: separation column
- 24:: analysis unit (detection unit)
- 25:: specimen rack supply unit
- 26:: conveyance line
- 27:: ID reading unit
- 28:: overall management computer (control unit)
- 29:: operation unit
- 30:: display device (display unit)
- 31:: storage device
- 200:: device state confirmation screen
- 201:: preprocessing unit button
- 202:: separation column button
- 203:: analysis unit button
- 204:: process transition display
- 300, 400:: specimen processing status confirmation screen
- 301, 401:: specimen processing information
- 302, 402:: close button
- 403:: column type
- 404:: mask button
- 405:: number of remaining uses of column
- 500:: mask setting confirmation screen
- 501:: warning text
- 502:: execute button
- 503:: cancel button

## Claims

1. A liquid chromatography device in which a plurality of separation columns are connected to a flow path of a separation unit, the liquid chromatography device comprising:
a first storage unit configured to store an analysis process planned when an analysis is requested, an order of the analysis process, and a separation column used for the analysis;
a second storage unit configured to store an analysis process planned immediately before the analysis is actually executed, an order of the analysis process, and a separation column used for the analysis;
a collation unit configured to collate a content stored in the first storage unit and a content stored in the second storage unit; and
a notification unit configured to notify, when the collation unit determines that the content stored in the first storage unit and the content stored in the second storage unit are different from each other, that the contents are different from each other.

2. The liquid chromatography device according to claim 1, further comprising:
a checking unit configured to check, when the collation unit determines that the content stored in the first storage unit and the content stored in the second storage unit are different from each other, whether there is a separation column available for the analysis process stored in the first storage unit among separation columns different from the separation column used for the analysis stored in the second storage unit; and
a control unit configured to execute, when the checking unit confirms that there is the separation column available for the analysis process, a control to continue the analysis using the separation column.

3. The liquid chromatography device according to claim 1, further comprising:
a checking unit configured to check, when the collation unit determines that the content stored in the first storage unit and the content stored in the second storage unit are different from each other, whether there is a separation column available for the analysis process stored in the first storage unit among separation columns different from the separation column used for the analysis stored in the second storage unit; and
a control unit configured to execute a control to interrupt the analysis on a specimen requested to be analyzed when the checking unit confirms that there is no separation column available for the analysis process.

4. The liquid chromatography device according to claim 1, further comprising:
a checking unit configured to check, when the collation unit determines that the content stored in the first storage unit and the content stored in the second storage unit are different from each other, whether there is a separation column available for the analysis process stored in the first storage unit among separation columns different from the separation column used for the analysis stored in the second storage unit; and
a control unit configured to execute, when the checking unit confirms that there is no separation column available for the analysis process, a control to continue the analysis using the separation column which is used for the analysis stored in the second storage unit after an analysis preparation is executed, the analysis preparation including cleaning the separation column such that the analysis stored in the second storage unit is executable.

5. A control method for a liquid chromatography device in which a plurality of separation columns are connected to a flow path of a separation unit, the control method comprising:
a step of storing, in a first storage unit, an analysis process planned when an analysis is requested, an order of the analysis process, and a separation column used for the analysis;
a step of storing, in a second storage unit, an analysis process planned immediately before the analysis is actually executed, an order of the analysis process, and a separation column used for the analysis;
a collation step of collating the content stored in the first storage unit and the content stored in the second storage unit; and
a notification step of notifying, when it is determined in the collation step that the content stored in the first storage unit and the content stored in the second storage unit are different from each other, that the contents are different from each other.

6. The control method for a liquid chromatography device according to claim 5, further comprising:
a checking step of checking, when it is determined in the collation step that the content stored in the first storage unit and the content stored in the second storage unit are different from each other, whether there is a separation column available for the analysis process stored in the first storage unit among separation columns different from the separation column used for the analysis stored in the second storage unit, wherein
when it is confirmed in the checking step that there is the separation column available for the analysis process, the analysis is continued using the separation column.

7. The control method for a liquid chromatography device according to claim 5, further comprising:
a checking step of checking, when it is determined in the collation step that the content stored in the first storage unit and the content stored in the second storage unit are different from each other, whether there is a separation column available for the analysis process stored in the first storage unit among separation columns different from the separation column used for the analysis stored in the second storage unit, wherein
the analysis on a specimen requested to be analyzed is interrupted when it is confirmed in the checking step that there is no separation column available for the analysis process.

8. The control method for a liquid chromatography device according to claim 5, further comprising:
a checking step of checking, when it is determined in the collation step that the content stored in the first storage unit and the content stored in the second storage unit are different from each other, whether there is a separation column available for the analysis process stored in the first storage unit among separation columns different from the separation column used for the analysis stored in the second storage unit, wherein
when it is confirmed in the checking step that there is no separation column available for the analysis process, the analysis is continued using the separation column which is used for the analysis stored in the second storage unit after an analysis preparation is executed, the analysis preparation including cleaning the separation column such that the analysis stored in the second storage unit is executable.
